**Europäisches Patentamt**

**European Patent Office**

**Office européen des brevets**

(19)

(11) Veröffentlichungsnummer: **0 201 840**
A2

(12) # EUROPÄISCHE PATENTANMELDUNG

(21) Anmeldenummer: **86106148.9**

(22) Anmeldetag: **06.05.86**

(51) Int. Cl.⁴: **G 01 F 3/00**
**G 01 F 15/075, G 01 F 9/00**

(30) Priorität: **09.05.85 DE 3516634**

(43) Veröffentlichungstag der Anmeldung:
**20.11.86 Patentblatt 86/47**

(84) Benannte Vertragsstaaten:
**DE FR GB NL**

(71) Anmelder: **Kirchberger, Franz**
**Lichtenfelser Strasse 43**
**D-8623 Staffelstein(DE)**

(72) Erfinder: **Kirchberger, Franz**
**Lichtenfelser Strasse 43**
**D-8623 Staffelstein(DE)**

(74) Vertreter: **LOUIS, PÖHLAU, LOHRENTZ & SEGETH**
**Kesslerplatz 1 P.B. 3055**
**D-8500 Nürnberg(DE)**

(54) **Verfahren zur Ermittlung des Treibstoffverbrauches eines Dieselmotors, sowie Vorrichtung zur Durchführung dieses Verfahrens.**

(57) Es wird ein Verfahren und eine Vorrichtung zur Ermittlung des Treibstoffverbrauches eines Dieselmotors beschrieben, wobei der Dieselmotor eine Einspritzpumpe (24) und mindestens eine Einspritzdüse (20) aufweist, die miteinander durch eine Treibstoffleitung (22) verbunden sind. Die durch die Einspritzpumpe (24) erzeugten Druckimpulse des Treibstoffes werden gemessen, in eine elektrische Grösse umgewandelt und zeitabhängig aufintegriert. Das Zeitintegral der elektrischen Grösse wird an den Ausgang einer elektronischen Schaltung (36, 38, 40, 42, 50) angelegt, an den zur Kompensation eines drehzahlabhängigen Integrationsfehlers ein programmierbarer Mikroprozessor (56) angeschlossen wird.

FIG. 4

EP 0 201 840 A2

Croydon Printing Company Ltd.

WA TE
'ER LO 'S
S PÜHI J
LOHRENTZ
ANG SEGETH
A1Z 1
BERG 20

**0201840**

Verfahren zur Ermittlung des Treibstoffverbrauches eines Dieselmotors, sowie Vorrichtung zur Durchführung dieses Verfahrens

Die Erfindung betrifft ein Verfahren zur Ermittlung
des Treibstoffverbrauches eines Dieselmotors, der
eine Einspritzpumpe und mindestens eine Einspritzdüse
aufweist, die miteinander durch eine Treibstoffleitung
verbunden sind, wobei die Drehzahl des Dieselmotors
bei unterschiedlichen Belastungen mittels eines Reglers konstant gehalten wird, bei dem die durch die
Einspritzpumpe erzeugten Druckimpulse des Treibstoffes gemessen und in eine elektrische Grösse umgewandelt werden, und bei dem die den Druckimpulsen entsprechenden Impulse der elektrischen Grösse zeitabhängig aufintegriert und das Zeitintegral der aufintegrier ten elektrischen Impulse an einen Ausgang
einer elektronischen Schaltung angelegt wird, sowie
eine Vorrichtung zur Durchführung dieses Verfahrens.

Die den Druckimpulsen entsprechenden Impulse der elektrischen Grösse werden bei diesem Verfahren zeitabhängig aufintegriert. Dieses Integral der Impulse der
elektrischen Grösse über der Zeit ist ein Mass für
den Treibstoffverbrauch des drehzahlgeregelten Dieselmotors, das dem tatsächlichen Treibstoffverbrauch in
Abhängigkeit von der Drehzahl des Dieselmotors vergleichsweise gut entspricht. Insbesondere bei niedrigen Drehzahlen bis ca. 1500 U/min ergibt sich eine sehr gute Anpassung des ermittelten Treibstoffverbrauches in Bezug zum tatsächlichen Treibstoffverbrauch. Bei höheren Drehzahlen des Dieselmotors ist
diese Anpassung zwar nicht mehr ganz so gut wie bei
niedrigen Drehzahlen, sie ist jedoch auch bei höheren
Drehzahlen hinreichend charakteristisch, um mit Hilfe
tabellarisch aufgezeichneter drehzahlbezogener
Korrekturfaktoren den tatsächlichen Kraftstoffverbrauch aus dem Zeitintegral der Impulse der elektrischen Grösse ableiten zu können. Die elektrischen
Impulse werden an eine elektronische Schaltung angelegt, an deren Ausgang ein Signal ansteht, das dem
Integral der Druckimpulse entspricht. Wenn an den
Ausgang der elektronischen Schaltung unmittelbar ein
zur Anzeige des Treibstoffverbrauches vorgesehenes
Messgerät angeschlossen wird, ist es erforderlich,
den am Messgerät angezeigten Wert mit dem dem angezeigten Wert entsprechenden Korrekturwert zu vergleichen, der                    in einer Tabelle festgehalten ist. Die Verwendung eine Tabelle zur Bestimmung des tatsächlichen Treibstoffverbrauches aus dem
mit dem Messgerät angezeigten Treibstoffverbrauch
ist jedoch verhältnismässig aufwendig.

Deshalb liegt der vorliegenden Erfindung die Aufgabe
zugrunde, ein Verfahren anzugeben, mit dem der Treibstoffverbrauch eines drehzahlgeregelten Dieselmotors
über seinen gesamten Drehzahlbereich vergleichsweise
genau gemessen werdenkann, und eine Vorrichtung zur
Durchführung dieses Verfahrens zu schaffen.

Diese Aufgabe wird erfindungsgemäss dadurch gelöst,
dass an den Ausgang der elektronischen Schaltung zur
Kompensation des drehzahlabhängigen Integrationsfehlers ein programmierbarer Mikroprozessor angeschlossen wird, wobei der Mikroprozessor in Abhängigkeit von der Motordrehzahl mit geeichten Treibstoffverbrauchswerten programmiert wird. Diese Programmierung zur Kompensation des drehzahlabhängigen Integrationsfehlers kann durcheine vorweggenommene, d.h. durch eine arbeitsbegleitende Eichung der Druckanzeige vor Ort durchgeführt werden. Für diese Eichung wird ein genau vorherbestimmtes Treibstoffvolumen bei einer bestimmten Drehzahl verbraucht.Durch die Anwendung eines den Integrationsfehler kompensierenden Mikroprozessors wird die drehzahlabhängige Messungenauigkeit auf ein Minimum reduziert, so dass der Treibstoffverbrauch eines drehzahlgeregelten Dieselmotors bei allen möglichen Drehzahlen vergleichsweise genau ermittelt werden kann.

Es hat sich als zweckmässig erwiesen, dass zur Ermittlung des Treibstoffverbrauches die Frequenz der Druckimpulse gemessen wird, dass der drehzahlabhängige Integrationsfehler in Abhängigkeit von der Druckimpulsfrequenz bestimmt wird, und dass der Integrationsfehler mittels des Mikroprozessors kompensiert wird. Die Frequenz der Druckimpulse kann jederzeit genau gemessen werden, während insbesondere bei hohen Drehzahlen die Amplitude und die Dauer der den Druckimpulsen entsprechenden Impulse der elektrischen Grösse nicht mehr so genau bestimmt werden können. Aus der gemessenen Frequenz der Druckimpulse ist es möglich, auf die Druckimpulse selbst und damit auf den verbrauchten Treibstoff rechnerisch rückzuschliessen, so dass mit einem derartigen Verfahren eine genaue Ermittlung des Treibstoffverbrauches eines drehzahlgeregelten Dieselmotors über seinen gesamten Drehzahlbereich realisierbar ist.

Zur Durchführung des erfindungsgemässen Verfahrens ist eine Vorrichtung mit einem Drucksensor zur Umwandlung der mechanischen Druckimpulse in Impulse einer elektrischen Grösse vorgesehen, die dadurch gekennzeichnet ist, dass eine elektronische Schaltungseinrichtung zur zeitlichen Integration der elektrischen Impulse und eine Messeinrichtung zur Anzeige des dem Treibstoffverbrauch entsprechenden Impulsintegrales vorgesehen ist. Dabei ist es möglich, pro Kolben des Dieselmotors mindestens einen Drucksensor vorzusehen. Die elektronische Schaltungseinrichtung zur zeitlichen Integration der von dem mindestens einen Drucksensor erzeugten elektrischen Impulse weist zur Entzerrung der Impulssignale vorzugsweise Einzelverstärker auf, die mit Abgleicheinrichtungen zusammengeschaltet sind. Am Ausgang des Operationsverstärkers kann ein Messgerät zur Anzeige des Treibstoffverbrauches über einen programmierbaren Mikroprozessor angeschlossen sein. Wie bereits weiter oben beschrieben worden ist, zeigt die Messeinrichtung insbesondere bei höheren Drehzahlen des drehzahlgeregelten Dieselmotors über 1500 U/min einen kleineren Wert an, als dem tatsächlichen Treibstoffverbrauch entsprechen würde. Zur Kompensation dieses Messfehlers ist der Ausgang des Operationsverstärkers über einen programmierbaren Mikroprozessor mit einem Messgerät zur Anzeige des Treibstoffverbrauches verbunden. Dabei ist der Mikroprozessor mit den den unterschiedlichen Drehzahlen entsprechenden Kompensationsfaktoren des Treibstoffverbrauches programmiert, so dass der insbesondere bei höheren Drehzahlen immer grösser werdende Fehler der zeitlichen Integration der elektrischenImpulse durch den mit den Kompensationsfaktoren programmierten Mikroprozessor weitestgehend ausgeglichen wird. Dadurch ist die Anzeige des Treibstoffverbrauches am Messgerät an den tatsächlichen Treibstoffverbrauch bestmöglichst an-

geglichen. Der Drucksensor kann zur Umwandlung der mechanischen Druckimpulse in elektrische Widerstandsänderungen mindestens einen an sich bekannten Dehnungsmesstreifen aufweisen. Dieser mindestens eine Dehnungsmesstreifen in Form eines veränderbaren elektrischen Widerstandes wird in an sich bekannter Weise in eine Brückenschaltung eingeschaltet, so dass sich bei einer Änderung des Druckes und der dadurch bedingten Widerstandsänderung des Dehnungsmesstreifens eine Ändereung der Diagonalspannung der Brückenschaltung ergibt. Diese druckabhängige Diagonalspannung kann in der oben beschriebenen elektronischen Schaltung ausgewertet werden. Der Drucksensor kann andererseits mindestens ein piezoelektrisches Element zur Umwandlung dermechanischen Druckimpulse in elektrische Spannungssignale aufweisen. Bei derartigen an sich bekannten piezoelektrischen Elementen ergibt sich bei einer Druckbeaufschlagung des piezoelektrischen Elementes unmittelbar eine elektrische Spannung, die in der elektronischen Schaltung der oben beschriebenen Art ausgewertet werden kann .

Weitere Einzelheiten, Merkmale und Vorteile der Erfindung werden nachfolgend an Hand der Zeichnung beschrieschrieben. Es zeigen:

Fig. 1 einen Dieselmotor teilweise im Schnitt,

Fig. 2 eine vergrösserte Darstellung des Details II aus Fig. 1 teilweise geschnitten,

Fig. 3 einen Schnitt entlang der Schnittlinie III-III aus Fig. 2,

Fig. 4 eine elektronische Schaltung mit in einer Brücke zusammengeschalteten Drucksensoren, Verstärkern und einem Messgerät zur Anzeige des Treibstoffverbrauches,

Fig. 5 eine Blockschaltung mit einem dem Messgerät gem. Fig. 4 vorgeschalteten programmierbaren Mikroprozessor,

Fig. 6a und 6b die Abhängigkeit des durch die Einspritzpumpe erzeugten Druckes p und der durch den Drucksensor bestimmten elektrischen Spannung U in Abhängigkeit von der Zeit t bei verschiedenen Drehzahlen n des Dieselmotors, und

Fig. 7 eine Darstellung des Treibstoffverbrauches V in Abhängigkeit von der Drehzahl n des drehzahlgeregelten Dieselmotors.

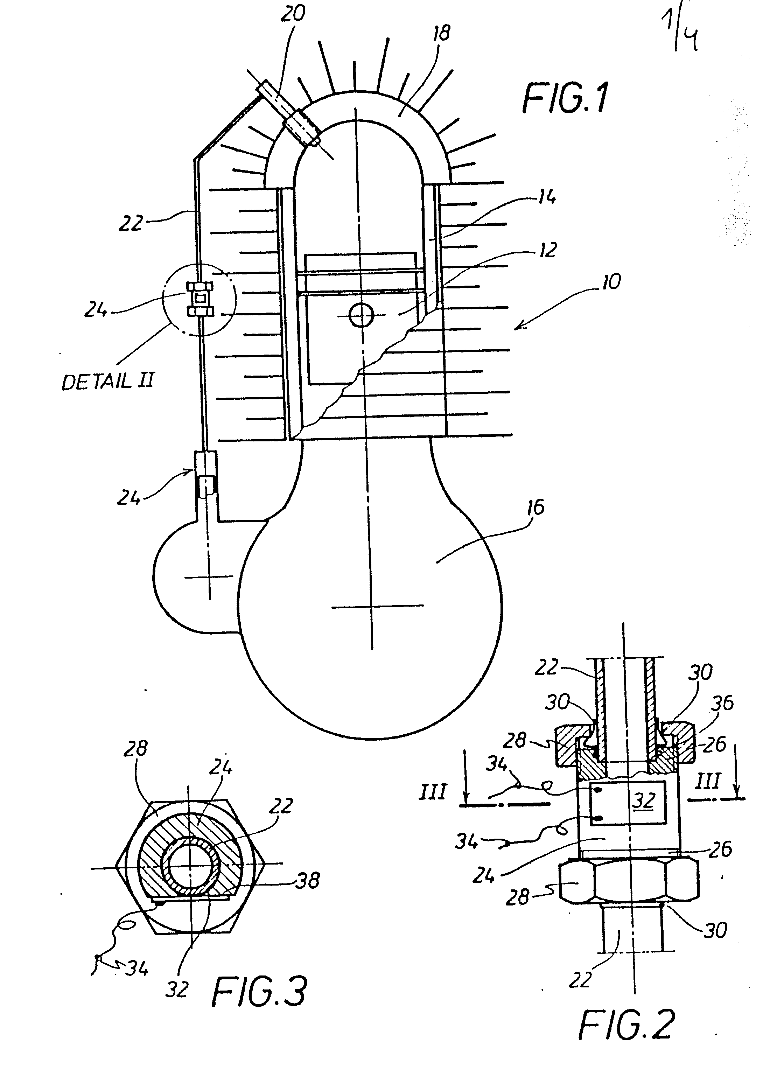

Fig. 1 zeigt einen teilweise geschnittenen Dieselmotor 10 mit einem Kolben 12, einer Zylinderbüchse 14, einem Kurbelgehäuse 16 und einem Zylinderkopf 18. der Zylinderkopf 18 durchdringt eine Einspritzdüse 20, die über eine Versorgungsleitung 22 mit einer Einspritzpumpe 24 verbunden ist. In die Versorgungsleitung 22 ist ein Messkörper 24 eingeschaltet, wie auch aus Fig. 2 deutlich ersichtlich ist. Der Messkörper 24 ist an seinen beiden gegenüberliegenden Endbereichen mit einem Aussengewinde 26 versehen. Auf den mit einem Aussengewinde versehenen Endbereichen des Messkörpers 24 sind Überwurfmuttern 28 aufgeschraubt, die mittels eines Federringes 30 den Messkörper 24 zwischen der Versorgungsleitung 22 festklemmen. Bei dieser Klemmverbindung handelt es sich um eine dichte Verbindung zwischen dem Messkörper 24 und der Versorgungsleitung 22. Der Messkörper 24 und die Versorgungsleitung 22 weisen den gleichen Innenquerschnitt auf, damit die Strömung des Treibstoffes durch die Versorgungsleitung und durch den Messkörper hindurch unverändert bleibt.Der Messkörper 24 weist nur deshalb einen grösseren Aussenquerschnitt auf als die Versorgungsleitung 22, damit auf der Oberfläche des Messkörpers 24 ein Drucksensor 32 beispielsweise in Form eines plättchenförmigen Dehnungsmesstreifens befestigt werden kann. Wenn der Drucksensor klein ist, kann er auch unmittelbar auf der Versorgungsleitung 22 befestigt werden. Es wäre auch möglich, den Drucksensor auf der Stirnfläche des Kolbens der Einspritzpumpe 24 zu befestigen. Mit der Bezugsziffer 23 sind Anschlussdrähte des Drucksensors 32 bezeichnet. Mit der Bezugsziffer 36 ist ein Dichtungsring zwischen der Versorgungsleitung 22 und dem Messkörper 24 bezeichnet.

Wie aus Fig. 3 ersichtlich ist, kann der Messkörper 24 mit einer flachen Ausfräsung 38 ausgebildet sein, in welcher der plättchenförmige Dehnungsstreifen 32 eben befestigt ist. Mit der Bezugsziffer 34 ist ein Anschlussdraht des Dehnungsmesstreifens 32 bezeichnet. Die Bezugsziffer 22 bezeichnet die Versorgungsleitung, die Bezugsziffer 24 den Messkörper und die Bezugsziffer 28 die sechskantige Überwurfmutter zur mechanisch festen und abgedichteten Befestigung des Messkörpers 24 in derVersorgungsleitung 22.

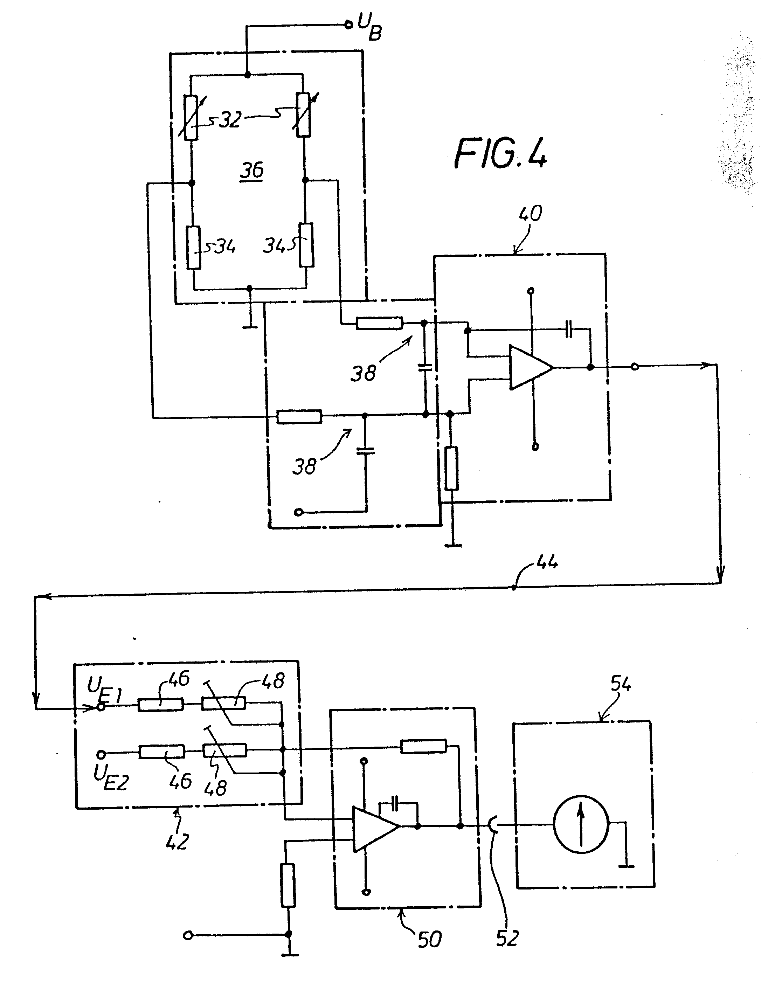

Fig. 4 zeigt eine elektrische Schaltung der Drucksensoren 32 in Form von an sich bekannten Dehnungsmesstreifen, die mit Festwiderständen 34 zu einer Brücke 36 zusammengeschaltet sind. An der einen Diagonale der Brücke 36 liegt die Spannung $U_B$ an, während die zweite Diagonale der Brücke 36 über RC-Glieder 38 am Eingang
eines entzerrenden Verstärkers 40 anliegt.

In jeder Versorgungsleitung 22 zwischen der Einspritzpumpe 24 und den Einspritzdüsen 20 der einzelnen Zylinder des Dieselmotors (sh.Fig.1) ist ein Messkörper 24
mit einem Drucksensor 32 vorgesehen. Jeder Drucksensor
32 ist mit einem entzerrenden Verstärker 40 zusammengeschaltet, wobei die Ausgänge der Verstärker 40 an Eingänge $U_{E1}$, $U_{E2}$... einer Abgleichschaltung 42 (sh.Fig.4)
angeschlossen sind. Die Verbindung eines Ausganges
eines Verstärkers 40 mit einem Eingang $U_{E1}$ der Abgleicheinrichtung 42 ist in Figur 4 durch den Pfeil 44 angedeutet. Die Abgleicheinrichtung 42 weist Vorwiderstände
46 und mit diesen in Reihe geschaltete Trimmerwiderstände 48 auf. Die Abgleicheinrichtung 42 ist mit einem
Operationsverstärker 50 verbunden, in welchem die von
der Abgleicheinrichtung 42 kommenden Signale verstärkt
werden. An den Ausgang 52 des Operationsverstärkers 50
ist ein Messgerät 54 zur Anzeige des Treibstoffverbrauches des drehzahlgeregelten Dieselmotors 10 angeschlossen.

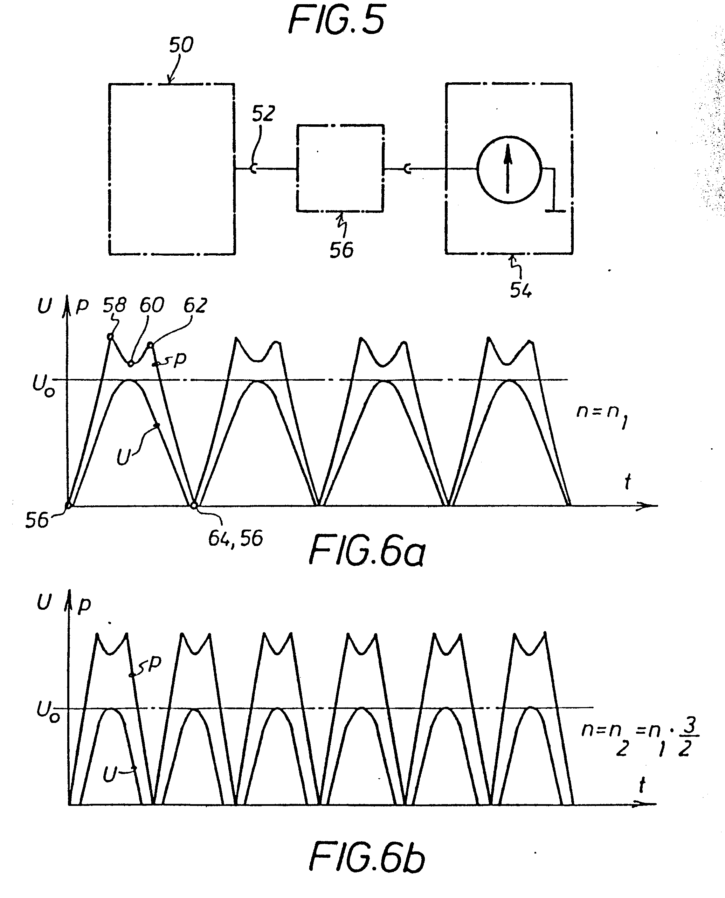

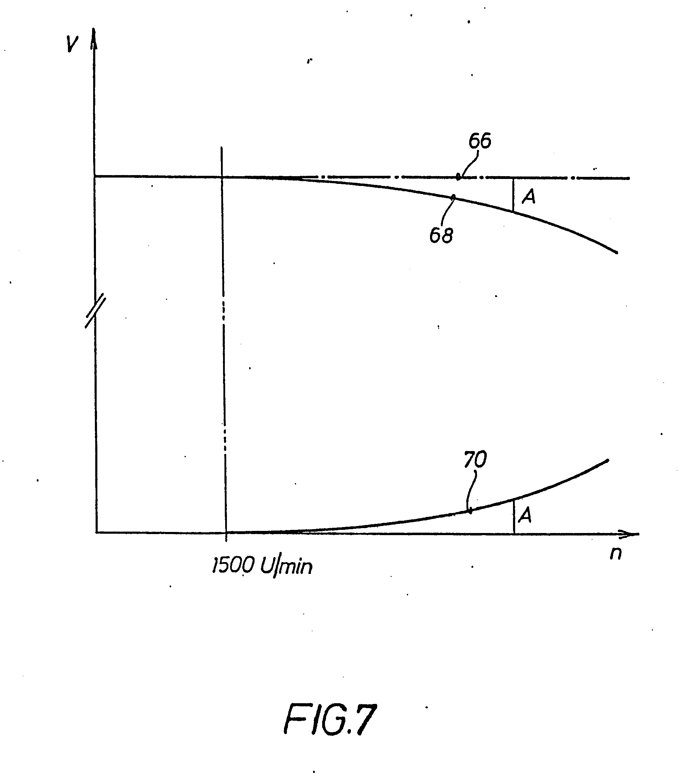

Wie aus Fig. 5 ersichtlich ist, kann zwischen dem Ausgang 52 des Operationsverstärkers 50 und dem Messgerät
54 ein programmierbarer Mikroprozessor 56 eingeschaltet sein. Die Wirkungsweise dieses programmierbaren
Mikroprozessors 56 wird nachfolgend in Verbindung mit
der Beschreibung der Figuren 6a, 6b und 7 erläutert.

Fig. 6a zeigt den Verlauf des Druckes p in Abhängigkeit
von der Zeit t. Wie aus dieser Figur ersichtlich ist,
bilden sich Druckimpulse, wobei der Druck von einem
Punkt 56 bis zu einem Punkt 58 infolge der Einspritzbewegung der Einspritzpumpe 24 zunimmt. Wenn der Druck p die beim Punkt 58 gegebene Grösse erreichthat, ändert
sich der Ausströmquerschnitt der Einspritzdüse 20 (sh.
Fig.1), so dass selbst bei einer weiteren Einspritzbewegung der Einspritzpumpe 24 der Druck nicht weiter zusondern bis zu einem Punkt 60 abnimmt. In diesem Punkt
60 kehrt die Einspritzpumpe 24, d.h. der Kolben der Einspritzpumpe 24 seine Bewegungsrichtung um, so dass ab
diesem Punkt 60 eigentlich eine Abnahme des Druckes p
zu erwarten wäre. In diesem Zustand ändert jedoch die
Einspritzdüse 20 ihren Querschnitt derart, dass sich
zeitlich nach dem Punkt 60 noch einmal ein Druckanstieg
bis zu einem Punkt 62 ergibt und der Druck p erst ab
diesem Punkt 62 zu einem Punkt 64 abnimmt, der dem
Punkt 56 des nächsten Druckimpulses entspricht. In
Fig. 6a sind vier Druckimpulse p über der Zeit t dargestellt. Infolge der Druckimpulse p ergibt sich eine
Dehnung des Messkörpers 24 (sh.Fig.1 bis 3). Da der
Drucksensor 32 am Messkörper 24 fest angeordnet ist,
führt der Drucksensor 32 eine der Ausdehnung des Messkörpers 24 entsprechende Dehnung aus, die einer definierten Widerstandsänderung des Drucksensors 32 entspricht. Diese Widerstandsänderung des Dehnungsmessstreifens bedeutet eine Änderung der elektrischen
Widerstände 32, wie sie in Fig. 4 dargestellt sind.
Diese Widerstandsänderung ergibt eine Änderung der
Diagonalspannung der Brücke 36, die am entzerrenden
Verstärker 40 anliegt. Wie ohne weiteres einzusehen
ist, wird also ein Druckimpuls p in einen Spannungsimpuls U umgewandelt, wobei der Spannungsimpuls U mit
dem Druckimpuls p phasengleich verläuft.

Die Figuren 6a und 6b unterscheiden sich dadurch,dass
in Fig. 6a Druckimpulse p und diesen entsprechende
Spannungsimpulse U bei einer Drehzahl $n = n_1$ des Dieselmotors entsprechen, während in Fig.6b Druckimpulse p und Spannungsimpulse U bei einer Drehzahl $n = n_2 = 3/2n_1$ in Abhängigkeit von der Zeit t dargestellt sind. Wie aus diesen beiden Figuren ersichtlich ist, wird bei einer höheren Drehzahl $n_2$ nicht nur die Amplitude $U_0$ der Spannungsimpulse kleiner, sondern auch die Breite der einzelnen Spannungsimpulse U. Das bedeutet, dass in Abhängigkeit von der Drehzahl n des Dieselmotors das Integral $\int U.dt$ mit grösser werdender Drehzahl n immer kleinere wird, so dass am Ausgang des Operationsverstärkers 50 ein integriertes Signal ansteht, das ab einer bestimmten Drehzahl n des Dieselmotors den tatsächlichen Treibstoffverbrauch mit einer immer grösseren Abweichung, d.h. mit einem immer grösser werdenden Fehler anzeigt. Wie aus Fig. 7 ersichtlich ist, in der der Treibstoffverbrauch V in Abhängigkeit von der Drehzahl n des Dieselmotors dargestellt ist, entspricht der mit dem Messgerät 54 (sh. Fig. 4) gemessene Treibstoffverbrauch V bis zu einer Drehzahl n in der Grössenordnung um 1500 U/min dem vorher oder arbeitsbegleitend bestimmten Treibstoffverbrauch V, der in Fig. 7 durch eine gerade strichpunktierte Linie 66 angedeutet ist. Der mit dem Messgerät 54 tatsächlich gemessene Treibstoffverbrauch ist durch die Linie 68 angedeutet. Aus dieser Figur ist ersichtlich, dass tatsächlich ab einer bestimmten Drehzahl n ein kleinerer Treibstoffverbrauch gemessen wird (-Kurve 68) als tatsächlich verbraucht wird (-Linie 66).

Mit Hilfe des in Fig. 5 angedeuteten programmierbaren Mikroprozessors 56 ist es möglich, die Abweichung A zwischen dem gemessenen Treibstoffverbrauch (-Kurve 68) und dem geeichten Treibstoffverbrauch (-Linie 66) in Abhängigkeit von der Drehzahl n zu bestimmen und diese Abweichung, die in Fig. 7 durch die Kurve 70 angedeutet ist, in den Mikroprozessor 56 einzuprogrammieren. Mit dem Mikroprozessor 56 ist es somit möglich, den Messfehler zu kompensieren, der sich durch die kleiner werdenden Spannungsimpulse U bei zunehmender Drehzahl n des Dieselmotors ergeben.

Mit dem erfindungsgemässen Verfahren bzw. mit der zur Durchführung dieses Verfahrens vorgesehenen erfindungsgemässen Vorrichtung ist es einfach möglich, den Treibstoffverbrauch eines drehzahlgeregelten Dieselmotors im Bedarfsfall relativ genau über den gesamten Drehzahlbereich des Dieselmotors zu bestimmen.

IAN WALTE
DIETER LOUIS
LAU: POHLAU
NZ LOHRENTZ
)LFGANG SEGETH
ERPLATZ 1
RNEERG 20

0201840

## ANSPRÜCHE:

1. Verfahren zur Ermittlung des Treibstoffverbrauches eines Dieselmotors, der eine Einspritzpumpe und mindestens eine Einspritzdüse aufweist, die miteinander durch eine Treibstoffleitung verbunden sind, wobei die Drehzahl des Dieselmotors bei unterschiedlichen Belastungen mittels eines Reglers konstant gehalten wird, bei dem die durch die Einspritzpumpe erzeugten Druckimpulse des Treibstoffes gemessen und in eine elektrische Grösse umgewandelt werden, und bei dem die den Druckimpulsen entsprechenden Impulse der elektrischen Grösse zeitabhängig aufintegriert und das Zeitintegral der aufintegrierten elektrischen Impulse an einen Ausgang einer elektronischen Schaltung angelegt wird,
d a d u r c h   g e k e n n z e i c h n e t ,
dass  an den Ausgang der elektronischen Schaltung zur Kompensation eines drehzahlabhängigen Integrationsfehlers ein programmierbarer Mikroprozessor angeschlossen wird, wobei der Mikroprozessor in Abhängigkeit von der Motordrehzahl mit geeichten Treibstoff-Verbrauchswerten programmiert wird.

-2-                                    **0201840**

2. Verfahren nach Anspruch 1, **dadurch gekennzeichnet,**
   dass die Frequenz der Druckimpulse gemessen wird,
   dass der drehzahlabhängige Integrationsfehler in
   Abhängigkeit von der Druckimpulsfrequenz bestimmt
   wird und dass der Integrationsfehler mittels des
   Mikroprozessors kompensiert wird.

3. Vorrichtung zur Durchführung des Verfahrens nach
   Anspruch 1 oder 2, mit einem Drucksensor zur Umwandlung der mechanischen Druckimpulse (p) in Impulse einer elektrischen Grösse (U), **dadurch ge-**
   **kennzeichnet,** dass eine elektronische Schaltung
   (36,38,40,42,50) zur zeitlichen Integration der
   elektrischen Impulse (U) und eine Messeinrichtung
   (54) zur Anzeige des dem Treibstoffverbrauch (V)
   entsprechenden Impulsintegrales vorgesehen ist.

4. Vorrichtung nach Anspruch 3, **dadurch gekennzeich-**
   **net** dass der Ausgang (52) des Operationsverstärkers (50) mit einem Messgerät (54) zur Anzeige des
   Treibstoffverbrauches (V) über einen programmierbaren Mikroprozessor (56) verbunden ist.

FIG.1

FIG.2

FIG.3

FIG.4

$U_B$

36

32
34  34

40

38

38

44

$U_{E1}$
46  48

$U_{E2}$
46  48

42

50

52

54

## FIG.5

## FIG.6a

## FIG.6b

FIG.7